# EUROPEAN PATENT APPLICATION

(11) **EP 4 109 190 A1**
(43) Date of publication of application: **28.12.2022**
(21) Application number: 21181494.2
(22) Date of filing: 24.06.2021
(51) Int. Cl.: G05B 23/02, G05B 19/406, G05B 19/418, G06Q 50/30, G06Q 10/00

(54) **METHOD OF AND APPARATUS FOR MAINTAINING A TRANSPORT SYSTEM**

(71) Applicant: Siemens Aktiengesellschaft, 80333 München (DE)
(72) Inventor: Rothering, Marcel, 90449 Nürnberg (DE)

(57) **Abstract**

A computer-implemented method of maintaining a transport system in a manufacturing facility (100) comprising the steps of: measuring (S1) one or more pose-related properties of a plurality of transportation devices (13) at a plurality of manufacturing stations (10) in the manufacturing facility (100), at which manufacturing stations (10) one or more workpieces (11) are processed, determining (S2) a statistical characteristic for each of the plurality of transportation devices (13) based on the pose-related properties, and determining (S3) a sequence for maintaining one or more transportation devices (13) based on the statistical characteristics, and optionally performing (S4) one or more maintenance procedures based on the sequence.

## Description

### TEHCNICAL FIELD

The present invention relates to a transport system, e.g., a conveying system and, more particularly, to a method of maintaining a transport system. The method further relates to a transport system in a manufacturing facility in which workpieces are processed at a plurality of manufacturing stations.

### BACKGROUND

In automobile production, car bodies are transported in fully automatic transport systems, for example comprising one or more conveyors. Using the conveyor or other type of transport system the car bodies pass through a body shop, and through a paint shop, e.g., before they are transported to a final assembly line.

The fully automatic conveyor systems, for example in an assembly line, use transportation devices to which the body is fixed as an assembly object. The transportation devices, also known as assembly support, holders or hangers, are generally used to transport the assembly objects, or workpieces in general.

In addition to automobile production and assembly processes in the narrower sense, the invention generally relates to manufacturing facilities in which one or more objects are subject to inspection and/or condition monitoring to determine and assess their actual condition. The workpieces can consequently be any components, parts, devices, machines, operating resources, production resources, subsystems, systems or functional units that are to be examined for example, with regard to temperature, vibration or positional deviations and/or maintained.

The position and orientation of an object, such as a workpiece and/or a transportation device, is summarized in the following under the term "pose". DIN EN ISO 8373 defines the term "pose" as a combination of position and orientation of an object in three-dimensional space, which is specified as the basic coordinate system. The position of the object can, for example, be specified in three coordinates as the distance of its mass point from the origin of the base coordinate system or other reference system. The orientation of the object can be described, for example, by setting up a further coordinate system at its point of mass, for whose coordinate axes an angular offset to the respective axes of the basic coordinate system is specified by three angle specifications. Different poses can be mapped onto one another by means of translation and rotation.

According to DIN EN 13306 and DIN 31051, maintenance refers to a combination of measures that serve to maintain or restore a functional condition of an object, such as a transportation device, a manufacturing station and/or a manufacturing facility. One of these measures is the inspection, which is used to determine and assess the actual condition of the object as well as to determine possible causes of impairments. The result of the inspection can be to identify repair measures for the property, which are then carried out. The term "object" here denotes, for example, a component, part, device or subsystem, a functional unit, an operating medium or a system that can be viewed on its own.

As part of condition monitoring, object conditions are recorded regularly or permanently by measuring and analyzing physical variables. For this purpose, sensor data are processed that are analyzed, for example in real time in particular. The monitoring of the object condition enables condition-based maintenance.

Both functional failures of objects such as transportation devices in manufacturing facilites and their repair as well as preventive inspection and maintenance work are associated with high costs, since they can lead to a standstill of the respective production section.

### SUMMARY

It is thus an object of the present invention to reduce downtime in a manufacturing facility by maintaining the transport system in the manufacturing facility and to provide a more efficient maintenance by identifying the most relevant and necessary maintenance activities.

According to a first aspect the object is achieved by a preferably computer-implemented method of maintaining a transport system in a manufacturing facility. The method comprising the step of measuring one or more pose-related properties of a plurality of transportation devices at a plurality of manufacturing stations in the manufacturing facility, at which manufacturing stations one or more workpieces are processed. The method further comprising the step of determining a statistical characteristic for each of the plurality of transportation devices based on the pose-related properties. The method further comprising the step of determining a sequence for maintaining one or more transportation devices based on the statistical characteristics. The method further comprising the optional step of performing one or more maintenance procedures based on the sequence.

According to a second aspect the object is achieved by an apparatus, the apparatus preferably comprising a processor and a memory. The apparatus is operative to perform at least part of the method steps of any one of the first aspect.

According to a third aspect the object is achieved by a computer program product comprising program means, that when executed perform the method steps of any one of the first aspect.

### BRIEF DESCRIPTION OF THE DRAWINGS

- Figure 1: illustrates multiple manufacturing stations in a manufacturing facility.
- Figure 2: illustrates the deviation in the pose of a transport device due to a workpiece being loaded.
- Figure 3: illustrates displacement and rotation of different transport devices.
- Figure 4: to 14 illustrate exemplary method steps according to particular embodiments.
- Figure 15: illustrates an apparatus comprising a processor and a memory.

### DETAILED DESCRIPTION

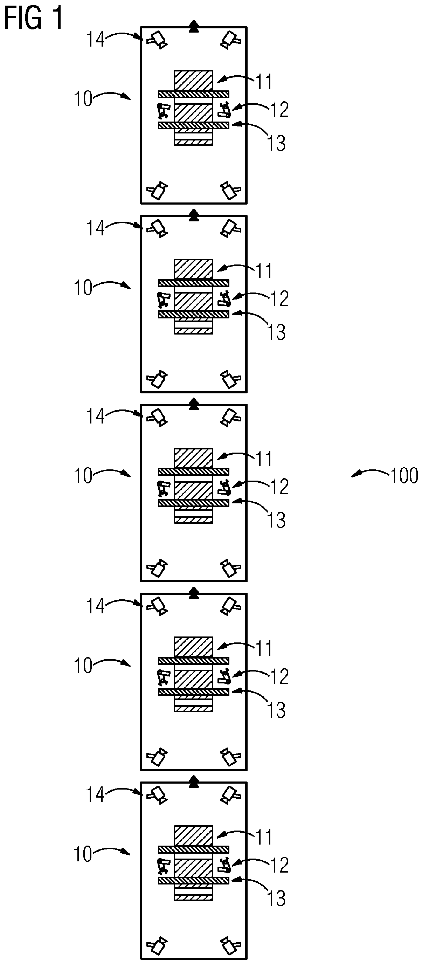

Figure 1 shows multiple manufacturing stations 10 in a manufacturing facility 100. The manufacturing stations 10 can be combined to form a production line. The production line may thus be formed by multiple manufacturing stations 10 where each manufacturing station 10 performs one or more of a set of sequential operations in order to make a finished article or end-product. In the embodiment according to figure 1 car bodies 11 are shown that are transported from one manufacturing station 10 to the next. However, other workpieces (than car bodies 11) may be transported using appropriate transport devices. The workpieces may be processed at the manufacturing stations 10. That is to say, at each manufacturing station 10 one or more manufacturing steps may be performed. For example, underbody painting of a car body may be performed at the manufacturing stations 10. To that end, each manufacturing station 10 comprises one or more robots 12 that apply a layer of paint to the underbody of the car body 11. At each station 10 a layer may be applied to the car body 11.

The car bodies 11 are transported to and/or from a manufacturing station 10 by way of one or more transportation devices. In the case of car bodies 11 the transportation devices are hangers 13 in which the car bodies are loaded. The hangers 13 themselves may be attached to a conveyor, not shown, that moves the hangers 13 from one manufacturing station 10 to the next. Other transport devices may include automated guided vehicles.

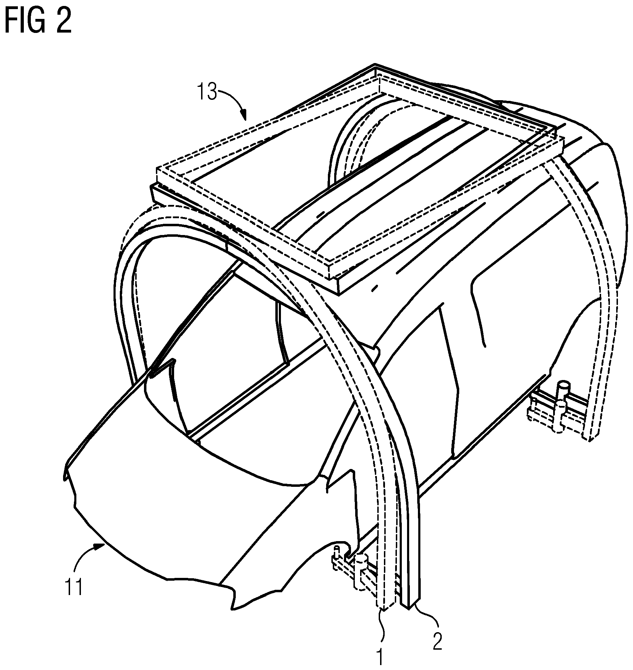

For the processing at a manufacturing station 10 to begin the pose of the car body 13 and/or the hanger 11 at a manufacturing station 10 needs to be determined. For this purpose, an actual pose of the workpiece in the manufacturing station 10, which indicates its position and / or rotation with respect to a target pose as shown in figure 2, is first determined via sensors 14. Such sensors 14 are often already installed in today's manufacturing stations 10, since they allow industrial robots 12 to be fine-tuned. For example, camera-based systems in robot cells, which are passed through manufacturing stations in the context of automobile production, measure the position and rotation of the workpiece fully automatically in each robot cell. To that end, fixed points on the car body may be used by the sensors to determine the pose of the car body. Of course, laser scanners, ultrasound, radar or lidar sensors can also be used. All of the named sensor types provide measured values from which the actual pose of the workpiece can be taken directly or at least calculated. For this purpose, the measured values are stored as raw values or, after suitable processing as sensor data. Such data acquisition in technical systems such as shop floors or manufacturing systems runs continuously in the background in today's industrial cloud applications, so that the corresponding data records only have to be retrieved from the industrial cloud for evaluation. A continuous update of the sensor data, which in turn updates a graphic representation of the sensor data, is advantageously also possible here on the basis of new measurements during operation. If necessary, such updates can even take place in real time.

Turning to figure 2, where the deviation in the pose of a transport device due to a workpiece being loaded is illustrated. Here a hanger 13 is depicted which carries a car body 11. The target pose 1 is, for example, a standardized pose which a manufacturing station to which the workpiece is fed expects and assumes for the workpiece. The target pose 1 may thus form a reference system of the manufacturing station 10. Thus, pose-related properties of the transportation device in a manufacturing station may be determined. The target pose 1 can be predetermined, for example, by a construction of the manufacturing station or it can be measured in advance. An actual pose 2 of the workpiece in the manufacturing station 10, which indicates its displacement and / or rotation with respect to the target pose 1, may be determined via sensors. The actual deviation between the target pose 1 and the actual pose 2 can only be a few millimeters or a very small angular deviation. Such a deviation can be of diagnostic significance in the context of the inspection and / or condition monitoring. The actual pose 2 may therefore calculated based on the sensor data by a processor.

Pose-related properties may thus be obtained in the form of a set of data records, for example, by storing the sensor data once or repeatedly after the respective measurements in a manufacturing station, for example together with context information. The data records can be continuously updated based on new measurements from the sensors in the one or more manufacturing stations. For example, the context information may comprise one or more of the following:
- a point in time of the measurements, or
- a place where the measurements were made, in particular a manufacturing station, such as a robot cell, or
- a type or a serial number of the transportation device, for example a hanger number 81, or
- a type or a serial number of the workpiece, in particular a workpiece loaded, i.e. mechanically connected, to the transportation device, for example a sedan body with four doors and a hatchback or the like, or
- a type or a serial number of one of the sensors.

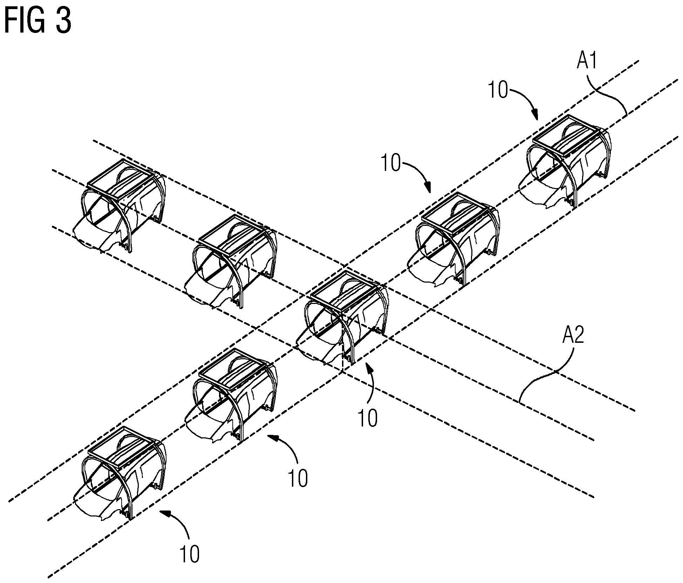

Turning to figure 3, for each of the data records, an actual pose of the respective transportation device, here always the hanger no. 78, is taken or calculated from the respective sensor data (here as variables of the respective robot cell). Figure 3 illustrates the hanger no. 78 on a first axis A1 in the different manufacturing stations 10 or robot cells. The hanger, or the transportation device in general, may have different deviations from the target pose in the different manufacturing stations.

In addition to the first hanger no. 78 pose-related properties of the hangers no. 36 and 81, are taken or calculated from the respective sensor data of the respective manufacturing station robot cell. The hangers with no. 36 and 81, respectively are identified by references signs 313, 323 in figure 3 and shown as on a second axis A2.

Up till now hangers and transportation devices in general are usually maintained in fixed maintenance cycles regardless of their true quality. It is thus desired to sort the transportation devices and/or to provide a sequence according to their quality. Based on the sorting and/or sequence a maintenance plan may be created. Critical transport devices can therefore be repaired or discharged at an early stage.

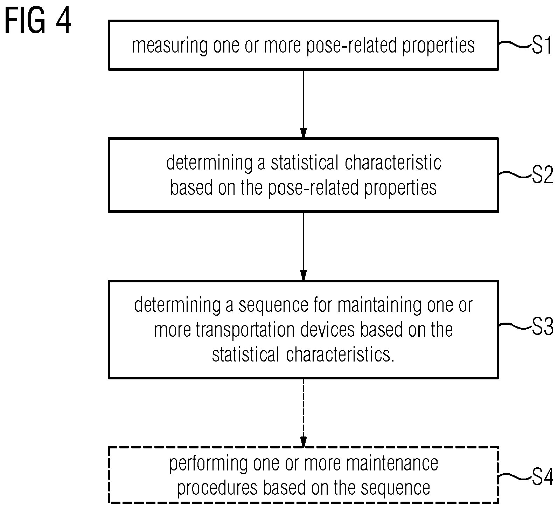

Turning to figure 4 exemplary method steps are described. in a first step S1 one or more pose-related properties of one or more transportation devices are measured. Instead of measuring the pose-related properties can be obtained from a memory, such as a database, where the pose related properties have been stored. The pose-related properties may be measured at a plurality of manufacturing stations, e.g., in a manufacturing facility. The pose-related properties may be determined for one or more, and preferably for a plurality of transportation devices. As described in the above, one or more workpieces are processed at the manufacturing station(s) .

In a second step S2, a statistical characteristic for each of the plurality of transportation devices based on the pose-related properties may be determined. A statistical characteristic, e.g., a distribution, may comprise a numeric value defined by a statistical measure. The statistical measure may be used to summarise the values for a specific quantitative variable, for example pose-related properties, for all statistical units in a specific group, e.g., one or more transport devices at the one or more manufacturing stations.

In a step S3 a sequence for maintaining one or more transportation devices based on the statistical characteristics may be determined. The sequence may be determined based on the values of the statistical characteristic(s). The sequence may be output to a user, e.g., manufacturing facility operator or a maintenance technician. The statistical characteristic(s) and/or the sequence determined may also be depicted in graphical or tabular format, including histograms and stem-and-leaf display.

In a step S4 one or more maintenance procedures based on the sequence may be performed. Such maintenance procedures may help avoiding unscheduled downtimes. Due to the planning and timely implementation of maintenance measures unnecessary, reactive work on plants and their unplanned shutdown can be avoided. Such preventive maintenance also helps in the continuous optimization of the maintenance and thus the manufacturing facility's operation.

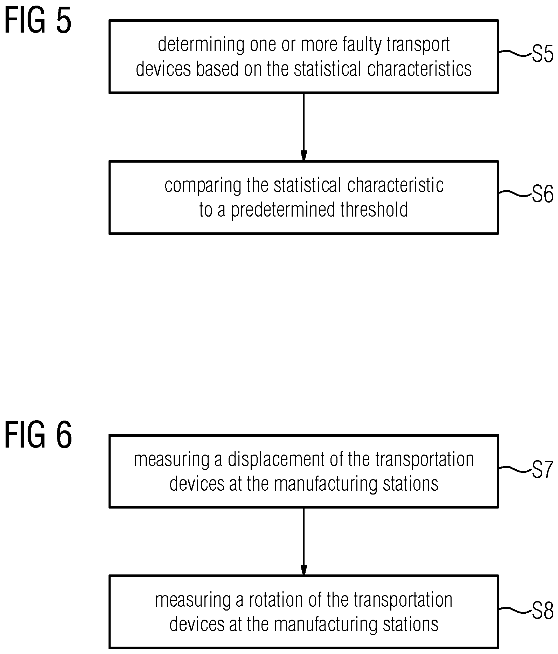

Further exemplary method steps are described in figure 5. In a step S5 one or more faulty transport devices may be based on the statistical characteristic. To that end the statistical characteristic may be compared to a predetermined threshold in a step S6. The predetermined threshold can be set by a user or may be calculated based on historical values of statistical characteristic. Accordingly, the sequence for maintaining the transportation devices may be based on the faulty transportation devices or the sequence for maintaining can be used for identifying the faulty transportation devices, e.g., the ones exceeding the predetermined threshold.

In figure 6 further exemplary method steps are shown. In a step S7 a displacement of the transportation devices at the manufacturing stations, preferably in relation to a reference system of the respective manufacturing stations is measured. Additionally, a rotation of the transportation devices at the manufacturing stations, preferably in relation to a reference system of the respective manufacturing station is measured in a step S8. Such measurements allow determining the pose of the transportation device and/or the workpiece in (each one of) the manufacturing station(s).

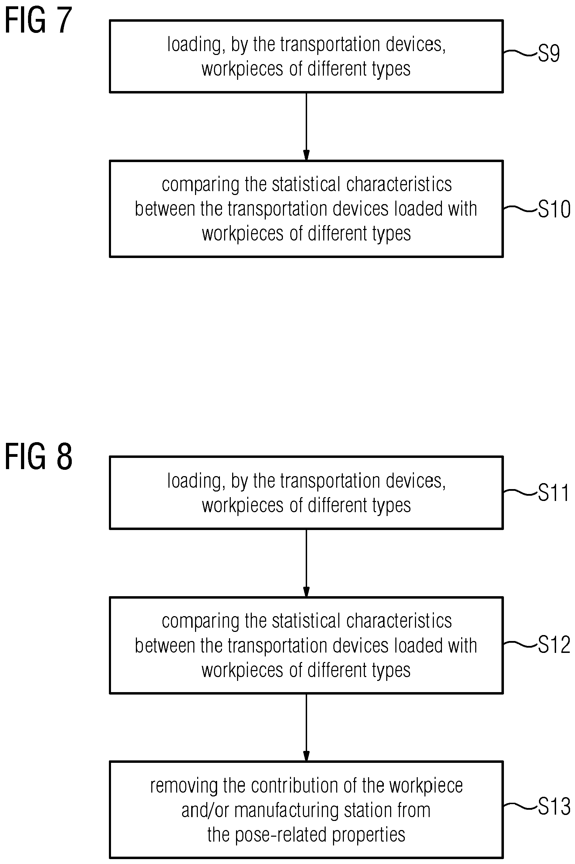

In figure 7 further exemplary method steps are shown. In a step S9 one or more workpieces of different types may be loaded, by the transportation devices. As described, a workpiece of a specific type may loaded, i.e. mechanically connected, to the transport device, for example a sedan body with four doors and a hatchback. For example, one workpiece at a time may be loaded on the transportation device. Subsequently a workpiece of a different type may be loaded onto the same transportation device, e.g., to process the workpiece according to their type. Different processing operations may be performed on the workpiece depending on the type of the workpiece. To that end however, the same transportation device may be used and/or the processing of the workpiece may be performed at the same manufacturing station or cell.

In a step S10 the statistical characteristics between the transportation devices loaded with workpieces of different types may be compared. The result of the comparison may be used to determine a sequence for maintaining the one or more transportation devices, e.g., according to step S5 in figure 4.

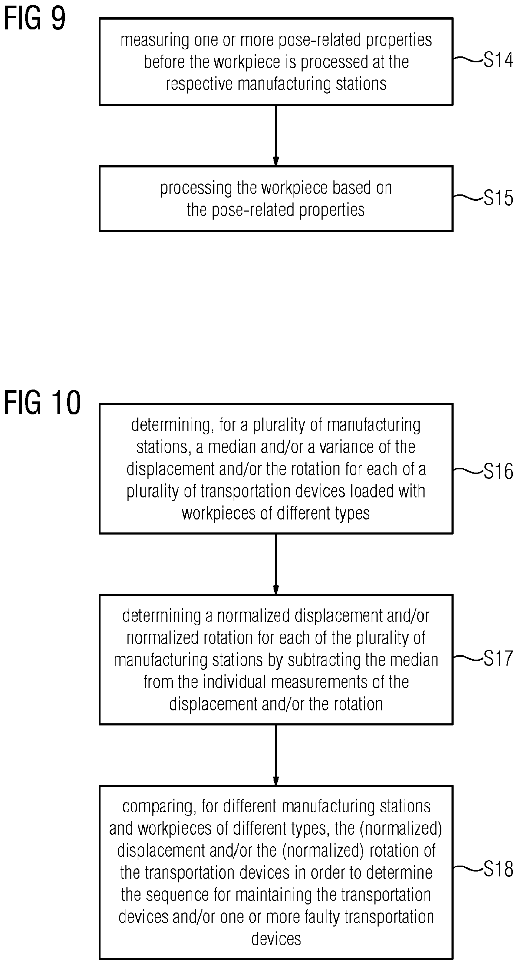

Further exemplary method steps are shown in figure 8. Here, as described in steps S9 and S10 of figure 7, different workpieces are loaded on the transportation devices and the statistical characteristics are compared in steps S11 and S12. In addition, the contribution of the workpiece and/or manufacturing station are removed from the pose-related properties. Each workpiece (or type of workpiece) may have an effect on the pose of the workpiece at a manufacturing station. Furthermore, the manufacturing station may have an effect on the pose of the workpiece. Still further, the transportation device may have effect on the pose of the workpiece at the manufacturing station. Now in order to determine one or more defective transportation device and/or to determine a sequence for maintaining the transportation devices the contribution of the workpiece (or type of workpiece) and the contribution of the manufacturing station are removed from the pose-related properties that are measured at a respective manufacturing station in a step S13. For example, the median value or the mean value (of past or historic measurements of the workpiece (type) and/or manufacturing station) may be subtracted from the present measurement of the pose-related properties as will be described in the following, e.g., in connection with figures 10 to 14. For example, the median value or mean value of the (past or historic) measurements of the pose-related properties of a workpiece (type), such as a car body of a Tiguan or Golf, at a first manufacturing station and/or at a second manufacturing station may be determined.

Turning to figure 9, the pose related properties of the one or more workpieces and/or transportation devices at the one or more manufacturing stations are measured. Thus, in a step S14 the one or more pose-related properties are measured before the workpiece is processed at the respective manufacturing station(s). Thus, at each of the one or more manufacturing station the pose of the workpiece is determined. Subsequently the workpiece is processed based on the pose-related properties in a step S15. As explained in the above the pose related properties such as displacement and/or rotation of the workpiece may be used by one or more robots at the manufacturing station to process the workpiece, e.g., apply paint to the workpiece. Hence, the pose-related properties that are determined for processing the workpiece may also be used for determining a sequence for maintaining the one or more transportation devices.

In figure 10 further exemplary method steps are shown. In a step S16 a median and/or a variance of the displacement and/or the rotation for each of a plurality of transportation devices loaded with workpieces of different types is determined for a plurality of manufacturing stations. That is, at each of a plurality of manufacturing stations displacement and/or rotation of a workpiece and/or the transportation device is determined. This may be performed for workpiece of the same type and for workpieces of different types.

In a step S17 a normalized displacement and/or normalized rotation for each of the plurality of manufacturing stations is determined, for example by subtracting the median from the individual measurements of the displacement and/or the rotation at a manufacturing station.

Then, in a step S18, the (normalized) displacement and/or the (normalized) rotation of the transportation devices is compared in order to determine the sequence for maintaining the transportation devices and/or one or more faulty transportation devices. The comparison of the (normalized) displacement and/or the (normalized) rotation of the transportation devices may be compared between different manufacturing stations and/or workpieces of different types. As a result of the comparison a sequence for maintaining the transportation devices may be obtained by ordering the transportation devices according to a deviation from the median and/or variance in ascending or descending order.

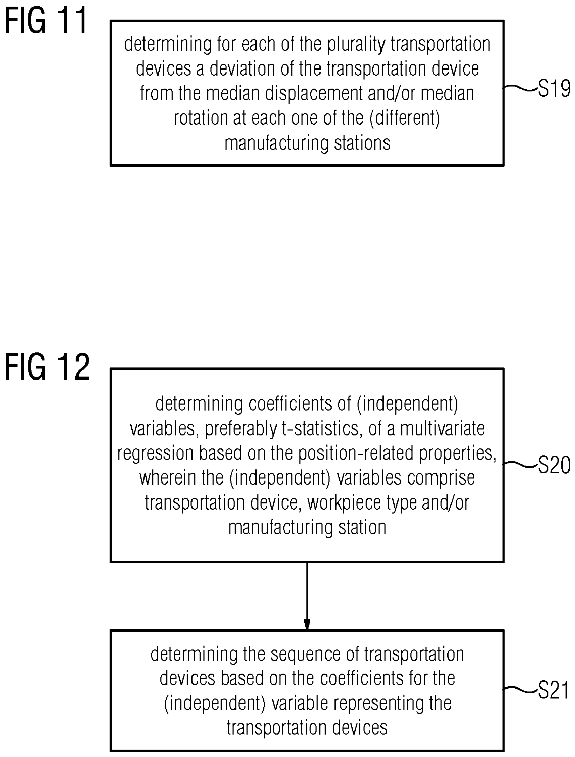

Turning to figure 11 a step S19 is shown according to which a deviation of the transportation device from the median displacement and/or median rotation at each one of the (different) manufacturing stations is determined. The deviation of the pose-related properties may be thus be determined between the individual or current measurement(s) at the manufacturing station(s) and the median of the pose-related properties at (all of) the manufacturing stations. Hence, a comparison according to step S18 may be performed according to step S19.

In figure 12 additional or alternative method steps 20, 21 are shown for determining a statistical characteristic for each of the plurality of transportation devices based on the pose-related properties. In a step S20 coefficients of (independent) variables, preferably t-statistics, of a multivariate regression based on the position-related properties, are determined, wherein the (independent) variables comprise transportation device, workpiece type and/or manufacturing station. The dependent variable of the multivariate regression may be a variable representing the pose of the car body and/or the transportation device.

In a step S20 the sequence of transportation devices is determined based on the coefficients for the (independent) variable representing the transportation devices. As before, the sequence may be determined by ordering the coefficients in an ascending or descending order according to their value.

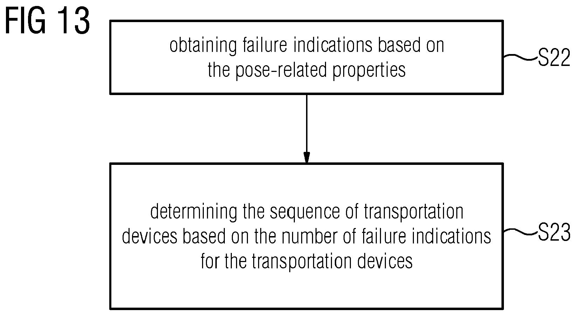

In figure 13 additional or alternative method steps 22, 23 are shown for determining a sequence of transportation device to be maintained. In a step S22, failure indications based on the pose-related properties are obtained. The failure indication may be obtained from a camera system or other sensor system of the manufacturing station which measures the pose-related properties. In case the pose exceeds one or more predetermined thresholds of rotation and/or displacement a corresponding failure indication may be created. The failure indication may be used to determine the optimal sequence of maintenance. Thus, in a step S23 the sequence of transportation devices may be determined based on the number of failure indications for the transportation devices.

Similarly to the embodiment of figure 12 a regression based on the (independent) variables transportation device, workpiece type and/or manufacturing station may be performed. The dependent variable of the regression may be the failure indication(s) in that case (instead of the pose). Thus the regression in that case may be a logistic regression.

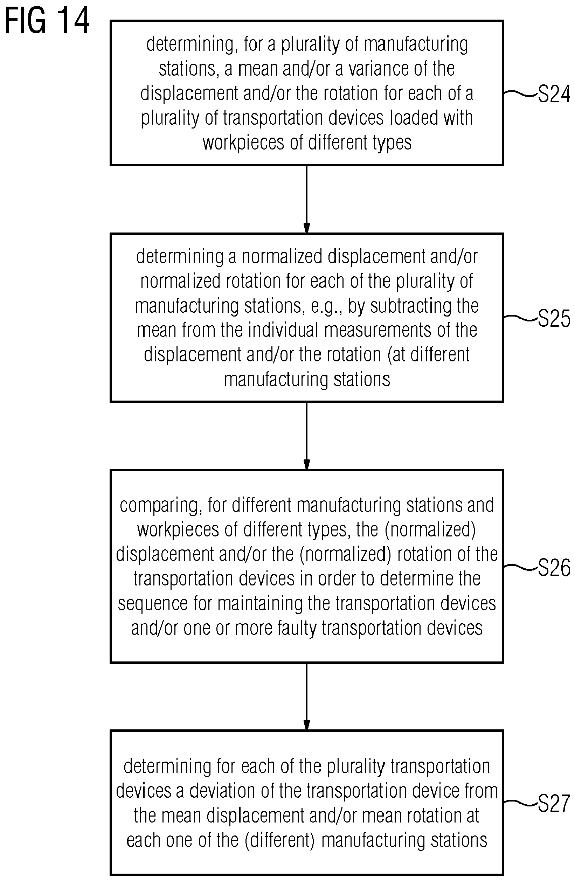

In figure 14 additional or alternative method steps 22, 23 are shown for determining a statistical characteristic are shown. In a step S24 a mean and/or a variance of the displacement and/or the rotation for each of a plurality of transportation devices loaded with workpieces of different types are determined, for a plurality of manufacturing stations.

In a step S25 a normalized displacement and/or normalized rotation for each of the plurality of manufacturing stations, e.g., is determined by subtracting the mean from the individual measurements of the displacement and/or the rotation (at different manufacturing stations.

In a step S26 the (normalized) displacement and/or the (normalized) rotation of the transportation devices are compared, for different manufacturing stations and workpieces of different types, in order to determine the sequence for maintaining the transportation devices and/or one or more faulty transportation devices.

The step S26 may comprise a step S27 a deviation of the transportation device from the mean displacement and/or mean rotation at each one of the (different) manufacturing stations is determined for each of the plurality transportation devices.

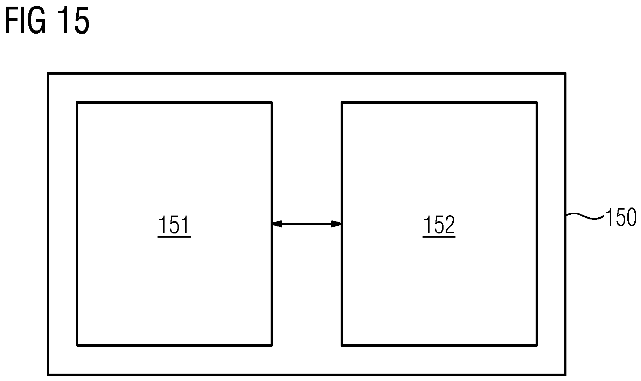

In figure 15 an apparatus 150 comprising a processor 151 and a memory 152 is shown. The apparatus 150 is operative to perform the method steps of any one of the preceding embodiments, e.g., as described in connection with figures 4 to 14.

To that end, the memory 152 may comprise instruction in form of program code, that may be executed by the processor 151. The instruction may implement the steps as described in the embodiments before, in particular in connection with figures 4 to 14.

## Claims

1. A computer-implemented method of maintaining a transport system in a manufacturing facility (100) comprising the steps of:
measuring (S1) one or more pose-related properties of a plurality of transportation devices (13) at a plurality of manufacturing stations (10) in the manufacturing facility (100),
at which manufacturing stations (10) one or more workpieces (11) are processed,
determining (S2) a statistical characteristic for each of the plurality of transportation devices (13) based on the pose-related properties, and
determining (S3) a sequence for maintaining one or more transportation devices (13) based on the statistical characteristics,
and optionally performing (S4) one or more maintenance procedures based on the sequence.

2. The method according to the preceding claim comprising the step of:
determining (S5) one or more faulty transportation devices (13) based on the statistical characteristic, for example by comparing (S6) the statistical characteristic to a predetermined threshold.

3. The method according to any one of the preceding claims comprising the steps of:
measuring (S7) a displacement (2) of the transportation devices (13) at the manufacturing stations (10), preferably in relation to a reference system (1) of the respective manufacturing stations (10) and/or
measuring (S8) a rotation (2) of the transportation devices (13) at the manufacturing stations (10), preferably in relation to a reference system (1) of the respective manufacturing station (10).

4. The method according to any one of the preceding claims comprising the steps of:
loading (S9), by the transportation devices (13), workpieces of different types, e.g. car types, different geometry, sizes, weight, different suspension point and/or loading position on the transportation devices,
and comparing (S10) the statistical characteristics between the transportation devices (13) loaded with workpieces (11) of different types, e.g., at the same and/or at different manufacturing stations (10), for example by removing the contribution of the workpiece (11) and/or manufacturing station (10) from the pose-related properties.

5. The method according to any one of the preceding claims comprising the steps of:
measuring (S14) one or more pose-related properties before the workpiece (11) is processed at the respective manufacturing stations (10), and
processing (S15) the workpiece (11) based on the pose-related properties.

6. The method according to any one of the preceding claims comprising the steps of:
determining (S16), for a plurality of manufacturing stations,
a median and/or a variance of the displacement and/or the rotation for each of a plurality of transportation devices (13) loaded with workpieces (11) of different types.

7. The method according to any one of the preceding claims comprising the steps of:
determining (S17) a normalized displacement and/or normalized rotation for each of the plurality of manufacturing stations (10), e.g., by subtracting the median from the individual measurements of the displacement and/or the rotation, for example at different manufacturing stations (10).

8. The method according to any one of the preceding claims comprising the steps of:
comparing (S18), for different manufacturing stations (10) and workpieces (11) of different types, the (normalized) displacement and/or the (normalized) rotation of the transportation devices (13) in order to determine the sequence for maintaining the transportation devices (13) and/or one or more faulty transportation devices (13).

9. The method according to any one of the preceding claims comprising the steps of:
determining (S19) for each of the plurality transportation devices (13) a deviation of the transportation device (13) from the median displacement and/or median rotation at each one of the (different) manufacturing stations (10).

10. The method according to any one of the preceding claims comprising the steps of:
determining (S20) coefficients of (independent) variables,
preferably t-statistics, of a multivariate regression based on the pose-related properties, wherein the (independent) variables comprise transportation device (13), workpiece (11) type and/or manufacturing station (10).

11. The method according to the preceding claim comprising the steps of:
determining (S21) the sequence of transportation devices (13) based on the coefficients for the (independent) variable representing the transportation devices (13).

12. The method according to any one of the preceding claims comprising the steps of:
obtaining (S22) failure indications based on the pose-related properties, and
determining (S23) the sequence of transportation devices (13) based on the number of failure indications for the transportation devices (13).

13. The method according to any one of the preceding claims comprising the steps of:
determining (S24), for a plurality of manufacturing stations (10), a mean and/or a variance of the displacement and/or the rotation for each of a plurality of transportation devices (13) loaded with workpieces (11) of different types.

14. The method according to any one of the preceding claims comprising the steps of:
determining (S25) a normalized displacement and/or normalized rotation for each of the plurality of manufacturing stations (10), e.g., by subtracting the mean from the individual measurements of the displacement and/or the rotation at different manufacturing stations (10).

15. The method according to any one of the preceding claims comprising the steps of:
comparing (S26), for different manufacturing stations (10) and workpieces (11) of different types, the (normalized) displacement and/or the (normalized) rotation of the transportation devices (13) in order to determine the sequence for maintaining the transportation devices (13) and/or one or more faulty transportation devices (13).

16. The method according to any one of the preceding claims comprising the steps of:
determining (27) for each of the plurality transportation devices a deviation of the transportation device from the mean displacement and/or mean rotation at each one of the (different) manufacturing stations.

17. An apparatus (150), preferably comprising a processor (151) and a memory (152), operative to perform the method steps of any one of the preceding claims.

18. A computer program product comprising program means, that when executed perform the method steps of any one of the claims 1 to 15.
